# EUROPEAN PATENT APPLICATION

(11) **EP 4 339 456 A1**
(43) Date of publication of application: **20.03.2024**
(21) Application number: 22196339.0
(22) Date of filing: 19.09.2022
(51) Int. Cl.: F03D 13/20, F03D 80/50

(54) **SUPPORT STRUCTURE FOR A WIND TURBINE AND WIND TURBINE**

(71) Applicant: Nordex Energy SE & Co. KG, 22419 Hamburg (DE)
(72) Inventor: Muhamad, Ibrahim, 22419 Hamburg (DE); Festner, Gerald, 22419 Hamburg (DE)
(74) Representative: Epping - Hermann - Fischer

(57) **Abstract**

A support structure for a wind turbine (100) comprises:
- a rotor bearing housing (201), wherein the rotor bearing housing (201) is configured to accommodate a rotor bearing (250) for rotatably supporting a rotor shaft (114);
- a base (202), wherein the base (202) is configured to be rotatably mounted on top (103) of a tower (102) of the wind turbine (100) at a first end (203) of the base (202), wherein the base (202) is configured to be mounted with the rotor bearing housing (201) on a second end (204) of the base (202), wherein the base (202) comprises a side wall (205) which extends between the first end (203) and the second end (204) and the side wall (205) comprises a passage opening (206) for a people passage.

## Description

The disclosure relates to a support structure for a wind turbine which is in particular mountable on top of a tower of the wind turbine. The disclosure further relates to a wind turbine, in particular to a wind turbine comprising a support structure.

A wind turbine may include a rotor that includes a rotatable rotor hub assembly having multiple rotor blades. The rotor blades transform wind energy into a drive torque that drives a generator via a drive train.

It is desirable to provide a support structure for a wind turbine which provides reliable operation of the wind turbine. It is further desirable to provide a wind turbine that enables reliable operation.

Embodiments of the disclosure provide a support structure for a wind turbine. The support structure comprises a rotor bearing housing. The rotor bearing housing is configured to accommodate a rotor bearing. The rotor bearing is configured for rotatably supporting a rotor shaft. The support structure comprises a base. The base is configured to be rotatably mounted on top of a tower of the wind turbine at a first end of the base. The base is configured to be mounted with the rotor bearing housing on a second end of the base. The base comprises a side wall which extends between the first end and the second end. The side wall comprises a passage opening for a people passage.

The support structure is configured to mount the rotor shaft on top of the tower. The base is rotatably mountable on top of the tower, for example via a yaw mechanism. The base comprises the passage opening which could also be referred to as a manhole. The passage opening is big enough to allow the people passage. For example it is possible for a technician or another person to get from an inside of the base to an outside of the base via the passage opening. Of course the passage opening is also configured to allow a people passage from an outside to an inside of the base. For example, it is possible to reach an interior of a nacelle of the wind turbine from the tower through the base and the passage opening. In particular, it is not necessary to pass through the rotor bearing housing to reach the interior of the nacelle.

In particular, the rotor bearing housing and the base are two separate components which are individually manufactured and subsequently assembled together. The rotor bearing housing is supported on top of the tower via the base. The base is arranged between the rotor bearing housing and the top of the tower. As the passage opening is arranged at the base, the rotor bearing housing itself needs no passage opening. Thus, there is no need to provide space for the passage opening at the rotor bearing housing. This enables a greater design freedom for the rotor bearing housing. In particular, the rotor bearing housing can be designed to reliably support the rotor shaft independent of the passage opening. In particular, furthermore, the absence or the reduction of the size of opening(s) at the rotor bearing housing enables a better load distribution in the rotor bearing housing. Furthermore, the arrangement of the passage opening at the base enables the provision of a large passage opening and avoids the need for people to go through a narrow space inside the rotor bearing housing, in particular through a narrow space between the rotor bearing housing and the rotor shaft. In other words, this allows an improvement of an access route between the tower and the nacelle. Furthermore, this enables a greater design freedom for the nacelle. For example, the nacelle may be based on a one-story or a two-story design.

According to further embodiments, the side wall completely encloses the passage opening. Thus, the side wall completely encircles and limits the passage opening. In other words, the side wall surrounds the passage opening. In particular, the side wall extends between the first end and the second end along a vertical direction, wherein the vertical direction in particular corresponds to a longitudinal direction of the tower. The passage opening in particular allows a horizontal passage through the vertical side wall.

According to further embodiments, the base and the rotor bearing housing are fixed to each other. In particular, screws are used to fix the base and the rotor bearing housing to each other. During use, the base and the rotor bearing housing are fixed to each other such that no relative displacement between the rotor bearing housing and the base is possible. The base and the rotor bearing housing are rigidly connected to each other.

According to further embodiments, the base comprises a first connection interface, in particular a first flange. The first connection interface is located at the second end of the base. The rotor bearing housing comprises a second connection interface, in particular a second flange. The first connection interface and the second connection interface are connectable to each other to mount the base and the rotor bearing housing with each other. This allows to reliably transmit forces and moments between the base and the rotor bearing housing.

According to further embodiments, the first connection interface and the second connection interface comprise a continuous circumferential shape, in particular a continuous circular shape or a continuous elliptical shape. In particular, the first connection interface and the second connection interface are continuous circular flanges. More in particular, the first connection interface and the second connection interface are continuous circular ring flanges. A continuous circumferential shape allows a beneficial flow of forces and moments between the rotor bearing housing and the base. More specifically, the flow of forces and moments is distributed over the whole circumference of the connection interfaces, which leads to an optimal transmission of forces and moments between the rotor bearing housing and the base. Local concentrations of high forces and moments are avoided. In particular, in case of a continuous circular shape, the moments acting around a vertical axis are evenly and uniformly distributed along the whole circumference of the connection interfaces.

For example, the continuous circumferential shape also covers a substantially continuous circumferential shape with one or more small local interruptions, for example to let one or more electric cables and/or hydraulic lines through. According to further examples, the continuous circumferential shape covers a full 360° circumference without any interruption. The connection interfaces with the continuous circumferential shape comprises a contact interface along the circumferential shape which is close enough to a full 360° circumference such that a continuous flow of forces and moments between the rotor bearing housing and the base along the whole circumference is enabled.

According to further embodiments, the first connection interface and the second connection interface each comprise a multitude of corresponding holes for receiving mounting screws. The holes are arranged in a circumference, in particular in a circle or in an ellipse. This allows a distribution of the forces and moments along the whole circumference, such that the concentration of high forces and/or moments on one or several specific screws is avoided. In particular, in case the holes are arranged in a circle, the moments acting around a vertical axis are evenly and uniformly distributed over all screws.

According to further embodiments, the base comprises a yaw drive mounting interface for supporting at least one yaw drive, in particular for supporting a plurality of yaw drives. The yaw drive mounting interface is arranged at a first end of the base and protrudes from the side wall. The rotor bearing housing comprises no additional own yaw drive mounting interface. The yaw drive mounting interface is arranged below the rotor bearing housing. This provides a large space for the arrangement of the yaw drives. Therefore, the yaw drives may be arranged such that they can be easily accessed, for example for maintenance or replacement purposes. Furthermore, the yaw drives can be arranged with respect to the passage opening in such a way that the access route between the tower and the nacelle is further improved. Furthermore, when viewed from above, the yaw drives can be arranged closer to the rotor shaft, which means that the width of the nacelle can be reduced.

According to a further embodiment, the base comprises a component carrier mounting interface for mounting one component carrier or more component carriers. The component carrier mounting interface is comprised in or protrudes from the side wall. The component carrier is mountable on the base. The component carrier does not need to be mounted on the rotor bearing housing. For example, the base comprises the yaw drive mounting interface, the component carrier mounting interface and the passage opening. For example, the component carrier mounting interface and the passage opening are arranged in different regions of the side wall. In another example, the passage opening comprised in the side wall leads to an interior of the component carrier mounting interface protruding from the side wall. In such as case, the component carrier mounting interface comprises a supplementary passage opening oriented in a horizontal direction or in a vertical direction and leading to the interior of the nacelle.

According to further embodiments, the side wall is configured such that any cross-section of the side wall in a plane perpendicular to a longitudinal axis of the tower and above the first end comprises at least a circular arc and/or at least an elliptical arc. In particular, an outer boundary and/or an inner boundary of the cross-section comprise at least a circular arc and/or at least an elliptical arc. In particular, the side wall has a circular cross-section at its first end. As the tower typically has a circular cross-section, the elliptical arcs and even more the circular arcs contribute to a beneficial flow of forces and moments along the base to the tower. Furthermore, as the rotatable mounting of the base on top of the tower is typically realized via a yaw bearing having a circular shape, the elliptical arcs and even more the circular arcs contribute to a more uniform distribution of the forces and moments over the circumference of the yaw bearing. Local concentrations of high forces and moments are avoided. For example, the cross-section may additionally comprise one or more straight lines. The straight lines may be required for functional purposes such as space requirements for yaw drives next to the side wall.

According to embodiments, the cross-section, in particular the outer boundary and/or the inner boundary of the cross-section, may for example comprise a combination of one or more circular arcs, one or more elliptical arcs and/or one or more straight lines. In particular, the outer boundary and the inner boundary of the cross-section do not necessarily have corresponding circular arcs, elliptical arcs and/or straight lines, which means that the distance between the outer boundary and the inner boundary may vary along the circumference. In other words, the side wall may have a non-uniform thickness along its circumference. Alternatively or in addition, the side wall may have a non-uniform thickness in the vertical direction.

According to embodiments, the cross-section, in particular the outer boundary and the inner boundary of the cross-section, only comprises circular arcs. Thus, the cross-section has a full circular shape. More specifically, the cross-section has a circular ring shape, which means that the side wall has the shape of a hollow cylinder or of a hollow truncated cone. In particular, the component carrier mounting interface and/or the yaw drive mounting interface protrude from the side wall and are not taken into account for the above-mentioned geometrical considerations about the cross-section of the side wall. In particular, the passage opening is not taken into account for the above-mentioned geometrical considerations about the cross-section of the side wall.

Embodiments of the disclosure provide a wind turbine, in particular a wind turbine with a support structure according to one of the embodiments described herein. The wind turbine comprises a tower with a longitudinal axis extending along a vertical direction. The wind turbine comprises a yaw mechanism arranged on top of the tower. The wind turbine comprises the support structure, wherein the base is rotatably mounted on top of the tower of the wind turbine via the yaw mechanism.

The base acts as an interface between the tower and the rotor bearing housing. The base is arranged between the tower and the rotor bearing housing to provide the passage opening. Furthermore, the base is coupled with the yaw mechanism such that the base and therefore the rotor bearing housing are rotatable with respect to the tower via the yaw mechanism.

According to further embodiments, the wind turbine comprises a nacelle. The nacelle accommodates the support structure. The passage opening enables a passage between the base and the interior of the nacelle. For example, the passage opening provides access to the front side of the nacelle and to a spinner surrounding the rotor hub. Alternatively or in addition, the passage opening provides access to a rear side of the nacelle where for example electrical components are typically located. For example, the base comprises two or more passage openings such that the front side and the rear side are accessible via different passage openings. In such a case, there are two or more access routes between the tower and the nacelle.

According to further embodiments, the yaw mechanism comprises one or more yaw drives and a yaw bearing. The one or more yaw drives are mounted to the base. The base is connected to the tower via the yaw bearing. Due to the height of the base, the one or more yaw drives are at least partially arranged below the rotor bearing housing along the vertical axis. This provides a large space for the arrangement of the yaw drives.

According to further embodiments, the wind turbine comprises a rotor shaft extending along a shaft direction. The passage opening is configured such that a central axis of the passage opening and the shaft direction are parallel or perpendicular to each other when projected on a plane perpendicular to the vertical direction. This provides a symmetry of the base with respect to the shaft direction, which is beneficial for the load distribution in the base.

According to further embodiments, the base comprises a yaw drive mounting interface for a yaw drive. The yaw drive mounting interface is aligned with a plane perpendicular to the vertical direction. The yaw drive mounting interface being arranged at the base enables more space for the arrangement of the yaw drives compared to a situation in which a yaw drive mounting interface would directly be attached to the rotor bearing housing.

According to further embodiments, the passage opening is completely arranged below the rotor shaft. Alternatively or in addition, the passage opening is completely arranged below the rotor bearing housing along the vertical direction. The passage opening does not lead into the rotor bearing housing or in a region of the rotor shaft along the vertical direction.

The present invention will be further described with reference to the accompanying drawings. In the drawings, elements of the same structure and/or functionality may be referred to by the same reference signs. It is to be understood that embodiments shown in the figures are illustrative representations and are not necessarily drawn to scale.
Figure 1 is a schematic view of a wind turbine according to an embodiment,
Figure 2 is a schematic view of a nacelle according to an embodiment,
Figure 3 is a schematic view of a base according to an embodiment,
Figures 4 and 5 are schematic views of support structures according to embodiments,
Figure 6 is a schematic view of a base according to a further embodiment, and
Figure 7 is a schematic view of a support structure according to the embodiment of Figure 6.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention defined by the appended claims.

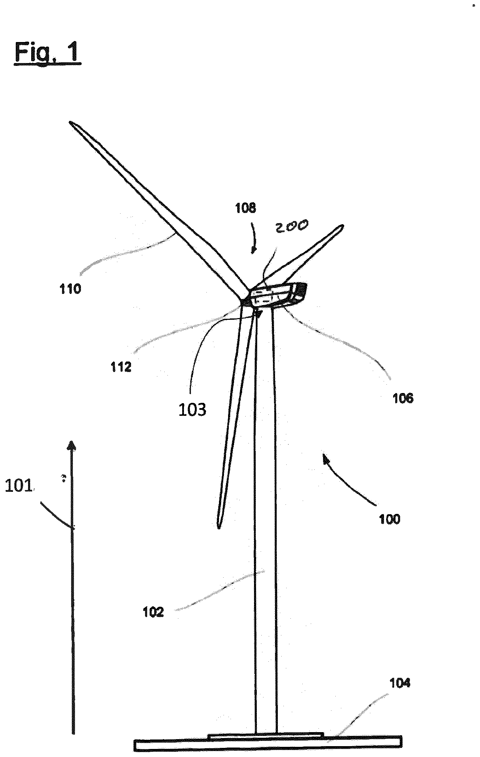

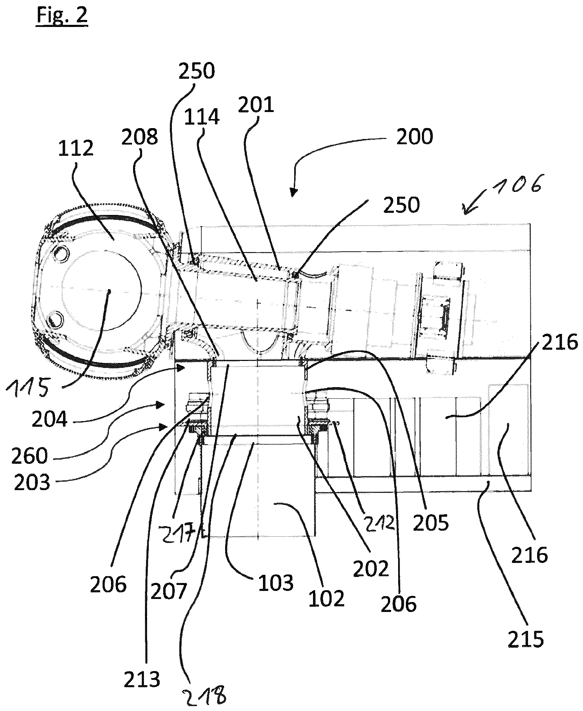

As shown in Figure 1, a wind turbine 100 comprises a tower 102. The tower 102 is connected to a foundation 104 fixed on a ground. The foundation 104 is formed on and supported by the ground. The tower 102 extends along a vertical direction 101. On a top end 103 of the tower 102 opposite to the foundation 104 a nacelle 106 is arranged. The nacelle 106 houses the drive train. Inside the nacelle 106, for example, a generator is arranged which is connected via the drive train with a rotor 108, the drive train comprising e.g. a gearbox and a rotor shaft 114 (Figure 2). The rotor 108 comprises several rotor blades 110. The rotor blades 110 are mounted on a rotor hub 112. The rotor hub 112 is connected to the rotor shaft 114.

The rotor 108 is driven in operation by an airflow, for example wind. The rotational movement of the rotor 108 is transmitted via the drive train to the generator. The generator converts the energy of the rotor 108 into electrical energy.

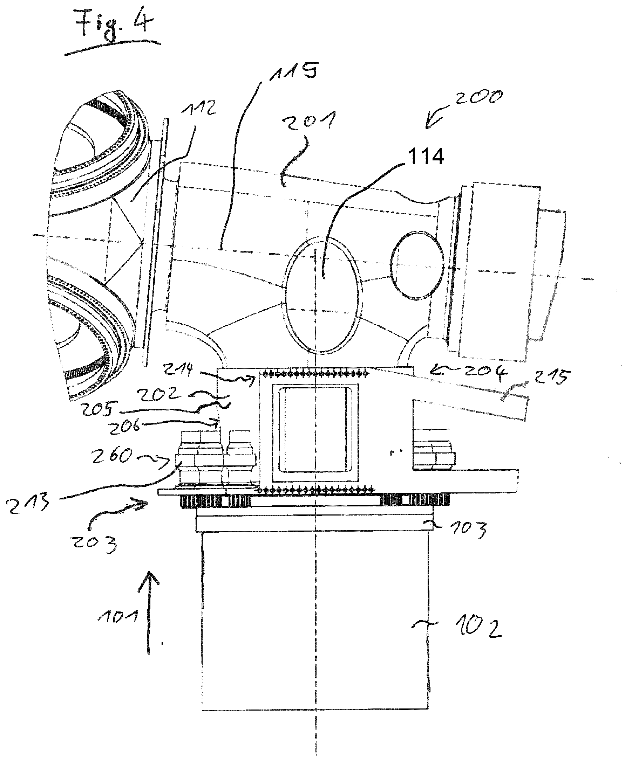

Figure 2 schematically shows the nacelle 106 comprising a support structure 200. Figures 4, 5 and 7 schematically show the support structure 200 which is arranged on the top 103 of the tower 102 inside the nacelle 106.

The support structure 200 comprises a rotor bearing housing 201. The support structure 200 further comprises a base 202.

The rotor bearing housing 201 is configured to hold and support two rotor bearings 250. The rotor bearing housing 201 surrounds the rotor shaft 114 at least in part. The rotor bearings 250 are arranged between the rotor shaft 114 and the rotor bearing housing 201 to allow a rotation of the rotor shaft 114 relative to the rotor bearing housing 201. The rotor bearing housing 201 supports and holds the rotor shaft 114, in particular such that axial loads and/or radial loads can be transferred between the rotor shaft 114 and the rotor bearing housing 201.

The base 202 is arranged between the tower 102 and the rotor bearing housing 201 along the vertical direction 101. The base 202 may also be referred to as machine frame or main frame. The base 202 comprises a hollow cylindrical shape. Other shapes are possible. The base 202 for example is made out of cast iron or comprises cast iron. For example, the base 202 has an extension along the vertical direction 101 of more than 1 m. For example, the base 202 has an extension along the vertical direction 101 between 0.75 m and 3 m, in particular between 1 m and 2 m.

Along the vertical direction 101 the base 202 comprises a first end 203. The base 202 is rotatably coupled with the tower 102 at the first end 203. The base 202 comprises a second end 204. The second end 204 is opposite the first end 203 along the vertical direction 101. The rotor bearing housing 201 is fixed to the base 202 at the second end 204.

The base 202 comprises a side wall 205 which extends between the first end 203 and the second end 204 along the vertical direction 101. The side wall 205 surrounds the hollow interior 219 of the base 202. The side wall 205 is configured to transmit forces and moments between the rotor bearing housing 201 and the tower 102.

The base 202 comprises a first connection interface 207, in particular a first flange 207 to mount and rigidly connect the rotor bearing housing 201 with the base 202. In particular, the rotor bearing housing 201 and the base 202 are fixed to each other at the first connection interface 207 such that they are not movable with respect to each other.

The rotor bearing housing 201 comprises a second connection interface 208 like a second flange. The first connection interface 207 and the second connection interface 208 are connectable to each other to fix the base 202 and the rotor bearing housing 201 to each other.

The support structure 200 is rotatably mounted on the top 103 of the tower 102 via a yaw mechanism 260. For example, the yaw mechanism 260 comprises a yaw bearing 217 and one or more yaw drives 213, wherein the one or more yaw drives 213 are mounted on a yaw drive mounting interface 212 of the base 202. The yaw mechanism 260 may comprise an additional element for supporting the one or more yaw drives 213, such as a yaw plate (not illustrated). A yaw plate for example is a plate separate to the base 202, which can be arranged between the base 202 and the yaw bearing 217. In particular, in case the yaw mechanism 260 comprises such an additional element for supporting the one or more yaw drives 213, the base 202 does not comprise any yaw drive mounting interface 212.

The base 202 as shown in Figure 2 comprises the yaw drive mounting interface 212 at the first end 203. The yaw drive mounting interface 212 protrudes radially over the side wall 205. The yaw drives 213 are arranged at the yaw drive mounting interface 212 to drive a rotational movement between the base 202 and the tower 102 around the vertical direction 101. The base 202 is supported at the top 103 of the tower 102 such that the support structure 200 and thus the rotor shaft 114 and the nacelle 106 are rotatable with respect to the tower 102. For example, a yaw bearing 217 is arranged between the base 202 and the tower 102 to allow the rotation between the base 202 and the tower 102.

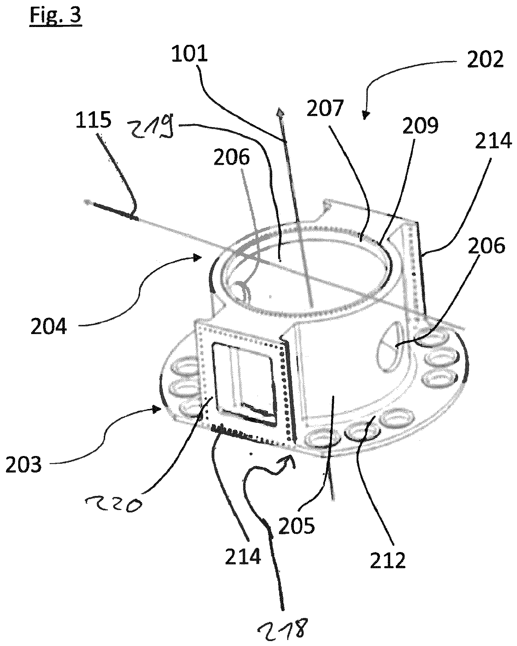

The base 202 comprises a component carrier mounting interface 214 (see also Figure 3). A component carrier 215 can be mounted and fixed to the component carrier mounting interface 214 such that the component carrier 215 is supported on the base 202.

The component carrier 215 is configured to carry and support one or more components 216, in particular electric components like a generator, a converter, a transformer or an electrical cabinet. Of course other electrical components 216 are possible. Alternatively or in addition the component carrier 215 is configured to carry mechanical components 216 like the gearbox or the nacelle cover or other components. It is possible that the component carrier consist of one single component carrier 215 or that the component carrier 215 comprises two or more component sub carriers 215. For example, one single component carrier 215 is arranged to carry the components 216. For example, several component carriers 215 are used to carry the same component 216. For example, several component carriers 215 are used to carry several components 216, wherein each component carrier 215 carries one or more of said several components 216.

The one or more component carriers 215 are mounted via the component carrier mounting interface 214 to the base 202 which transfers the loads between the component carrier 215 and the tower 102. The component carrier mounting interface 214 radially protrudes over the side wall 205 of the base 202. The component carrier mounting interface 214 comprises a lateral surface 220 which is perpendicular to the radial direction of protrusion (see Figure 3). The component carrier 215 may be mounted and fixed to the lateral surface 220, such as illustrated in Figure 4.

The base 202 comprises two passage openings 206 in the side wall 205. According to further embodiments, the base 202 comprises only one single passage opening 206 or more than two passage openings 206 in the side wall 205 like three, four or more passage openings 206. Optionally, the base 202 may comprise one or more additional openings in the side wall 205 which are no passage opening. These additional openings may for example be used to let electrical cables and/or hydraulic lines through.

The passage openings 206 are arranged in the side wall 205, such that the side wall 205 completely surrounds the passage opening 206. The passage openings 206 allow a horizontal passage through the side wall 205. Thus, a passage from the tower 102 to an inside of the nacelle 106 via the base 202 and through the side wall 205 is possible.

The passage openings 206 for example are configured to allow a people passage. Technicians, engineers, workers and other people can reach the nacelle 106 from the tower 102 via the passage opening 206. The other way around, people can reach the tower 103 from the nacelle 106 via the passage opening 206 and the base 202. For example, the passage opening 206 comprises a diameter of around 0.8 m, for example between 0.5 m and 1.5 m.

Along the vertical direction 101 the passage openings 206 are completely arranged below the rotor bearing housing 201 and the rotor shaft 114. Thus, the rotor bearing housing 201 can be designed without considerations of a required passage. This allows for example a larger diameter of the rotor shaft 114.

At the base 202 there is enough space to provide the passage opening 206 as well as the yaw drive mounting interface 212 with the yaw drives 213 because the base 202 is arranged below the rotor bearing housing 201 and below the rotor shaft 114.

As shown in the Figures, it is possible to arrange the passage openings 206 along a shaft direction 115 when projected on a plane perpendicular to the vertical direction 101. Along the vertical direction 101 the passage openings 206 are arranged below the shaft 114. The shaft 114 is completely arranged above the passage openings 206. Alternatively or in addition, the passage openings 206 are arranged perpendicular to the shaft direction 115 when projected on the plane perpendicular to the vertical direction 101. The arrangement of the passage openings 206 is shown in the Figures parallel to the shaft direction 115.

This arrangement allows a passage in the direction of the extension of the rotor shaft 114. The figures also show the component carrier mounting interface 214 protruding from the side wall 205 perpendicular to the shaft direction 115. The component carrier mounting interface 214 may alternatively protrude from the side wall 205 parallel to the shaft direction 115. Furthermore, other protruding direction of the component carrier mounting interface 214 are possible.

Figure 3 shows the base 202 according to an embodiment. The component carrier mounting interfaces 214 are arranged perpendicular to the passage openings 206. The yaw drive mounting interface 212 is arranged at the first end 203. The yaw drive mounting interface 212 projects over the side wall 205 parallel to the shaft direction 115 when projected on the plane perpendicular to the vertical direction.

The first connection interface 207 comprises a multitude of holes 209. The holes 209 are arranged in a circular shape. In particular, the holes 209 are arranged in a shape of a complete circle. In particular, the first connection interface 207, for example the flange 207 comprises a continuous circular shape, in particular a continuous circular ring shape. It is possible to have small interruptions in the continuous shape of the first connection interface 207, for example an interruption of 5° or less. As shown in Figure 3, the first connection interface 207 is designed without any interruption with the continuous ring shape.

Figure 4 schematically shows a side view of the component carrier 215 mounted on the base 202. The yaw drives 213 are arranged in front of and behind the component carrier mounting interfaces 214. The component carrier 215 is fixed to the base 202 for example by a plurality of screws. As shown in Figure 4, the rotor bearing housing may optionally comprise one or more openings. The rotor bearing housing may for example comprise such openings in order to save material in regions of the rotor bearing housing in which no material is needed in view of the load distribution within the rotor bearing housing.

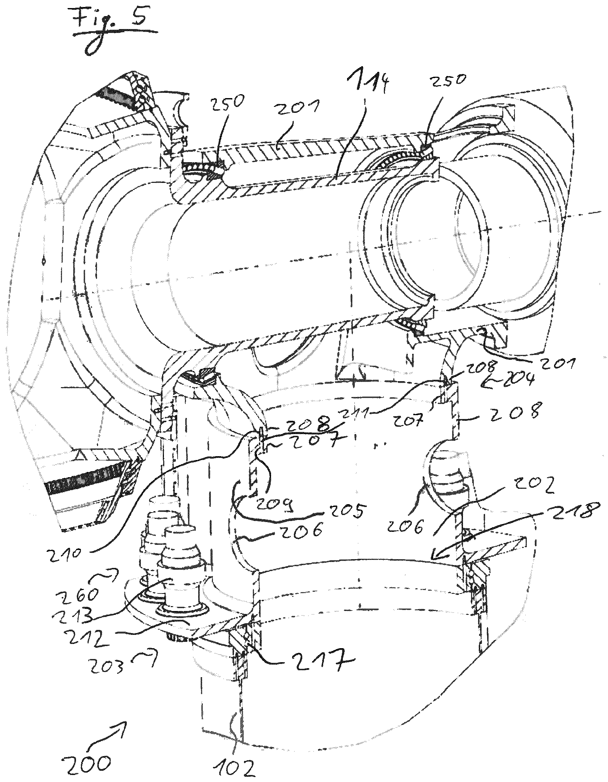

Figure 5 shows a sectional view. The rotor bearing housing 201 is fixed to the base 202 by mounting screws 211. The mounting screws 211 reach through the holes 209 of the base 202 into corresponding holes 210 of the rotor bearing housing 201. Like the holes 209 the holes 210 of the rotor bearing housing 201 are arranged in a circular shape. The holes 210 are arranged at the second connection interface 208 which in particular also comprises a circular shape, in particular a circular ring shape. The circular shape of the first connection interface 207 and the second connection interface 208 as well as the circular arrangement of the holes 209, 210 enable a reliable flow of forces between the rotor bearing housing 201 and the base 202 along the entire contact surface between the rotor bearing housing 201 and the base 202. The mounting screws 211 extend along the vertical direction 101. The holes 209 for example extend completely through the first connection interface 207. The first connection interface 207 for example is a L-flange. The second connection interface 208 may also be a L-shape (not illustrated). Alternatively, the first connection interface 207 and/or the second connection interface 208 may for example be a T-flange.

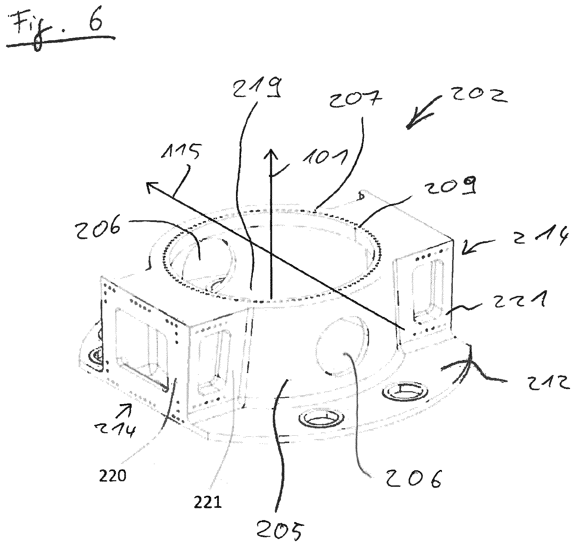

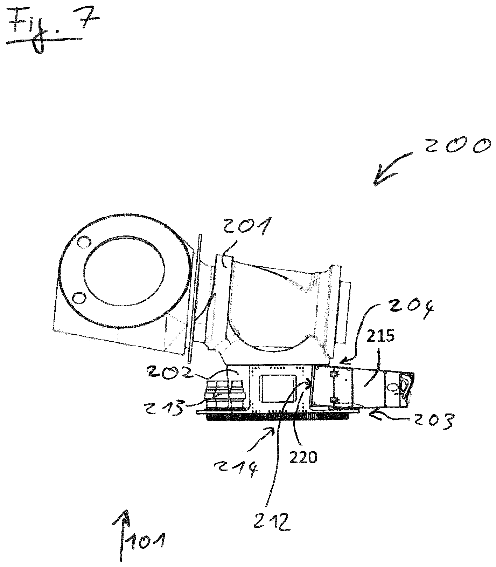

Figure 6 shows the base 202 according to a further embodiment. In addition to the lateral surface 220 illustrated in Figure 3, the component carrier mounting interface 214 comprises a radial surface 221 which extends along the radial direction of protrusion. The component carrier 215 may be mounted and fixed to the radial surface 221, such as illustrated in Figure 7. In another example, the component carrier 215 may be mounted and fixed to lateral surface 220 and to the radial surface 221. In another example, one component carrier 215 may be mounted and fixed to the lateral surface 220 and an additional component carrier 215 may be mounted and fixed to the radial surface 221.

As shown in Figure 2 the nacelle 106 can be designed with an upper nacelle story and a lower nacelle story. The rotor bearing housing 201 is arranged in the upper nacelle story. The base 202 is arranged in the lower nacelle story. Different components 216 can be arranged in the lower nacelle story and/or the upper nacelle story depending on available space. The stacking of the rotor bearing housing 201 and the base 202 along the vertical direction 101 on the top 103 of the tower 102 avoids the need to arrange all components 216 horizontally with respect to the shaft 214.

Between the base 202 and the tower 102 there may be one or several components, in particular to enable the relative rotation between the base 202 and the tower 102. For example, as an alternative to the yaw drive mounting interface 212 as an integral part of the base 202, the yaw mechanism 260 comprises a yaw plate arranged between the yaw bearing 217 and the base 202. The yaw plate for example is configured to support the yaw drives 213. The yaw plate is designed as a separate component to the base 202 and can be fixed to the base 202.

The base 202 comprises a tower passage opening 218 which provides a people passage between the tower 102 and the interior 219 of the base 202. The tower passage opening 218 allows a vertical passage along the vertical direction 101. The tower passage opening 218 and the passage opening 206 are arranged perpendicular to each other.

A technician who needs to reach the component 216 inside the nacelle 106 ascends the tower 102 and enters the interior 219 of the base 202 via the tower passage opening 218. From the interior 219 the technician passes the passage opening 206 to get into the nacelle 106.

The passage opening 206 which faces the rotor hub 112 allows access to a front side of the nacelle 106 and for example to a spinner surrounding the rotor hub 112. The passage opening 206 facing away from the rotor hub 112 for example allows access to a rear side of the nacelle 106, for example where the electrical components 216 are located.

For example, the nacelle 106 consists of a single module which comprises all relevant nacelle components such as the drive train, the generator as well as the other electrical and mechanical components 216. In this embodiment, the passage opening 206 provides access to the nacelle interior comprising all said relevant nacelle components. The relevant nacelle components may all be arranged on the same level inside the nacelle. Alternatively, the nacelle components may be separated in two or more groups, wherein each group is arranged at one story or level within a multistory nacelle (as shown in Figure 2). The passage opening may then for example provide access to a lower story of the nacelle. The nacelle cover of such a multistory nacelle may for example consist of two main cover parts connected to each other.

In another example, the passage opening 206 provides access to the lower module of a modular nacelle comprising two or more distinct modules positioned on top of each other.

The support structure 200 according to the different embodiments comprises the rotor bearing housing 201 and the base 202 as separate, vertically stacked parts. The base 202 comprises the passage opening 206, the component carrier mounting interface 214 as well as a coupling structure for mounting the base 202 on the top 103 of the tower 102 via a yaw mechanism 260. The rotor bearing housing 201 on top of the base 202 accommodates at least one part of the drive train, in particular the rotor shaft 114 and the rotor bearings 250.

The design of the first connection interface 207 and the second connection interface 208, in particular as a complete ring flange, allows a closed structure, which in particular can absorb and transmit forces and moments along its whole circumference. For example, loads from the rotor shaft 114 can be evenly transmitted to the tower 102 via the rotor bearing housing 201 and the interfaces 207, 208 as well as the base 202.

The passage opening 206 is open along the main extension of the rotor shaft 114. This allows convenient access to the interior of the nacelle 106 and crossing of the rotor hub 112.

The passage openings 206 can be designed large enough for a convenient access and in particular access routes between the tower and the nacelle can be improved. Forces can be reliably transmitted at the first end 203 as well as on the second end 204 of the base 202.

### References

- 100: wind turbine
- 101: vertical direction
- 102: tower
- 103: top
- 104: foundation
- 106: nacelle
- 108: rotor
- 110: rotor blade
- 112: rotor hub
- 114: rotor shaft
- 115: shaft direction
- 200: support structure
- 201: rotor bearing housing
- 202: base
- 203: first end
- 204: second end
- 205: side wall
- 206: passage opening
- 207: first connection interface
- 208: second connection interface
- 209, 210: holes
- 211: mounting screws
- 212: yaw drive mounting interface
- 213: yaw drive
- 214: component carrier mounting interface
- 215: component carrier
- 216: component
- 217: yaw bearing
- 218: tower passage opening
- 219: interior of base
- 220: lateral surface
- 221: radial surface
- 250: rotor bearing
- 260: yaw mechanism

## Claims

1. Support structure for a wind turbine (100), comprising:
- a rotor bearing housing (201), wherein the rotor bearing housing (201) is configured to accommodate a rotor bearing (250) for rotatably supporting a rotor shaft (114);
- a base (202), wherein the base (202) is configured to be rotatably mounted on top (103) of a tower (102) of the wind turbine (100) at a first end (203) of the base (202), wherein the base (202) is configured to be mounted with the rotor bearing housing (201) on a second end (204) of the base (202), wherein the base (202) comprises a side wall (205) which extends between the first end (203) and the second end (204) and the side wall (205) comprises a passage opening (206) for a people passage.

2. Support structure according to claim 1, wherein the side wall (205) completely encloses the passage opening (206).

3. Support structure according to claim 1 or 2, wherein the base (202) and the rotor bearing housing (201) are fixed to each other.

4. Support structure according to one of claims 1 to 3, wherein the base (202) comprises a first connection interface (207), in particular a first flange (207), at the second end (204) and the rotor bearing housing (201) comprises a second connection interface (208), in particular a second flange (208), wherein the first connection interface (207) and the second connection interface (208) are connectable to each other to mount the base (202) and the rotor bearing housing (201) with each other.

5. Support structure according to claim 4, wherein the first connection interface (207) and the second connection interface (208) comprise a continuous circumferential shape, in particular a continuous circular shape or a continuous elliptical shape.

6. Support structure according to claim 4 or 5, wherein the first connection interface (207) and the second connection interface (208) each comprise a multitude of corresponding holes (209, 210) for receiving mounting screws (211), wherein the holes (209, 210) are arranged in a circumference, in particular in a circle or in an ellipse.

7. Support structure according to one of claims 1 to 6, wherein the base (202) comprises a yaw drive mounting interface (212) for supporting at least one yaw drive (213), wherein the yaw drive mounting interface (212) is arranged at the first end (203) of the base (202) and protrudes from the side wall (205).

8. Support structure according to one of claims 1 to 7, wherein the base (202) comprises a component carrier mounting interface (214) for mounting one or more component carriers (215), wherein the component carrier mounting interface (214) is comprised in or protrudes from the side wall (205).

9. Support structure according to one of claims 1 to 8, wherein the side wall (205) is configured such that any cross-section of the side wall (205) in a plane perpendicular to a longitudinal axis of the tower (102) and above the first end (203) comprises at least a circular arc and/or at least an elliptical arc.

10. Wind turbine, comprising:
- a tower (102) with a longitudinal axis extending along a vertical direction (101),
- a yaw mechanism (260) arranged on top (103) of the tower (102),
- a support structure (200) according to one of claims 1 to 9, wherein the base (202) is rotatably mounted on top (103) of the tower (102) of the wind turbine (100) via the yaw mechanism (260).

11. Wind turbine according to claim 10, comprising
- a nacelle (106) accommodating the support structure (200), wherein the passage opening (206) enables a passage between the base (202) and the interior of the nacelle (106).

12. Wind turbine according to claim 10 or 11, wherein the yaw mechanism (260) comprises one or more yaw drives (213) and a yaw bearing (217), wherein the one or more yaw drives (213) are mounted to the base (202) and wherein the base (202) is connected to the tower (102) via the yaw bearing (217).

13. Wind turbine according to one of claims 10 to 12, comprising
- a rotor shaft (114) extending along a shaft direction (115), wherein the passage opening (206) is configured such that a central axis of the passage opening (206) and the shaft direction (115) are parallel or perpendicular to each other when projected on a plane perpendicular to the vertical direction (101).

14. Wind turbine according to one of claims 10 to 13, wherein the base (202) comprises a yaw drive mounting interface (212) for a yaw drive (213), the yaw drive mounting interface (212) being aligned with a plane perpendicular to the vertical direction (101).

15. Wind turbine according to claim 13 or 14, wherein the passage opening (206) is completely arranged below the rotor shaft (114) and/or the rotor bearing housing (201) along the vertical direction (101).
